# EUROPEAN PATENT APPLICATION

(11) **EP 4 154 998 A1**
(43) Date of publication of application: **29.03.2023**
(21) Application number: 21382871.8
(22) Date of filing: 28.09.2021
(51) Int. Cl.: B09B 3/00, B09B 1/00

(54) **METHOD AND LANDFILL FOR INERT WASTE STORAGE**

(71) Applicant: Martinez Martinez, José, 29602 Marbella (ES)
(72) Inventor: Martinez Martinez, José, 29602 Marbella (ES)
(74) Representative: Hoffmann Eitle

(57) **Abstract**

The present invention relates to a method for the inert storage of waste in a landfill, i.e., storage without any type of environmental emission such as: harmful particles, gases, liquids, or odors. The method of the invention comprises: constructing at least one concrete box that is open at the upper base thereof, dumping waste into a concrete box, applying a chemical substance with bactericidal and/or biocidal properties on the waste inside the box, and once the box is filled with waste, hermetically closing the box by placing a concrete slab on the upper base thereof, maintaining a conduit communicating the inside of the box with the outside, and a valve in said conduit. Lastly, a vacuum is introduced inside the box through the conduit, such that the waste is kept permanently stored inside the box in the absence of biological or chemical activity.

## Description

### Object of the Invention

The present invention relates to a technology for the inert storage of waste in a landfill in a controlled manner, i.e., storage without any type of environmental emission such as: harmful particles, gases, liquids, or odors.

### State of the Art

The future of humanity is plagued by two extremely serious problems: the potable water supply and human waste management.

As of today, the fall of 2021, waste management and treatment throughout the world presents serious shortcomings which represent an extremely serious environmental problem affecting human health, the world's flora and fauna, the atmosphere, as well as rivers, seas, and oceans.

Human activity involves the generation of significant amounts of waste. The abandonment or improper management of waste produces considerable impacts on the environment and causes water, land, and air pollution, as well as contributes to climate change, affecting ecosystems and human health. Therefore, the controlled treatment of this waste is compulsory and essential within an economy and industry that are sustainable with life and the environment.

In Spain, about 40 million tons of municipal waste are generated daily. In the European Union, fifty percent (50%) of waste are organic waste, and in the specific case of Spain, each Spanish person produces about 600 kg of garbage a year and forty-four percent (44%) of household waste are organic waste. In Spain, 53.7% of total municipal waste reach a landfill. The cost of the waste collection, elimination, and treatment service in Spain in 2017 exceeded four billion Euros (4630 million Euros) and revenues from population dues was slightly more than three billion Euros (3457 million Euros), with waste management therefore generating a deficit of more than one billion Euros (1173 million Euros).

In addition to the economical aspect, poor garbage management causes soil and landscape degradation, contaminates aquifers, rivers, lakes, and oceans, and has a direct and negative effect on health and biodiversity. About sixty percent (60%) of the volume and thirty percent (30%) of the weight of garbage bags are disposable receptacles. Many studies indicate that one-third of all plastic waste ends up in the soil or fresh water.

Plastic is an extremely long-lasting material which is dispersed very easily, so its amount in the ocean increases continuously.

On average, 8 million tons of plastic are dumped into the oceans each year, which is the equivalent to emptying a plastic-filled garbage truck every minute. If this trend is not changed, the earth's oceans will have 1 ton of plastic for every 3 tons of fish by 2025, and by 2050 there will be more plastics than fish.

There is a huge demand for plastic raw material and the global plastic production has increased from 2 million tons in 1950 to about 400 million tons in 2018. It is difficult to get an idea of this dimension which is equivalent to 13 million 30-ton trailer-tank trucks. The prediction is that demand will continue to grow until exceeding 1000 million tons by 2050.

This waste is driven by marine currents and has formed plastic islands or concentrations of considerable dimensions, with the largest one being found in the North Pacific (between the Californian coast and Hawaii) and is known as the "Great Pacific Garbage Patch" (GPGP). It measures more than a million square kilometers, exceeding the surface area of Spain, France, and Germany combined. Although the GPGP is the largest garbage island, it is not the only one, since one more can be found in the Pacific Ocean, two in the Atlantic Ocean, and another in the Indian Ocean. The Mediterranean sea is considered the 6^{th} greatest accumulation region for plastic waste. It holds only 1 % of the world's waters but concentrates 7% of all microplastics (particles smaller than 5 millimeters in diameter) of the planet.

One-third of all plastic waste ends up in the soil or bodies of fresh water. It is estimated that land pollution by microplastics is 4 to 23 times higher than marine pollution. One example of this is the pollution caused by textile fibers which are retained in the slurries of waste waters that are furthermore often used as fertilizers, which translates into tons of microplastics deposited in soils.

Current landfills are conceived and designed to allow bacteria to work by providing aeration (oxygen). They are therefore active systems, and paradoxically this "activity" is what causes the extremely serious environmental problem the world is facing as a result of the harmful substances emitted into the natural environment. To that end, landfills are a breeding ground for contaminating agents.

It is calculated that there are more than two-hundred thousand tons (236,000 tons) of plastic particles floating on the surface of the different seas of the world. Most of this plastic disintegrates into particles of less than five millimeters (<5 mm), known as microplastics, and these microplastics break down further until they become nanoparticles (less than 0.1 micrometers in size).

Solid waste most commonly end up in landfills or sanitary landfills. Controlled landfills can be defined as a site for eliminating waste by means of surface or underground deposition, in which waste is accumulated by means of controlled operations and with a suitable design, where the waste is pretreated, sorted, and compacted. However, landfills also entail a risk for the environment.

The particular case of landfills for electronic waste, particularly in Africa and Asia, constitutes a problem of catastrophic dimensions for the environment and human health.

Environmental pollution through poor waste management and control in landfills occurs as the result of the uncontrolled accumulation of garbage and the appearance of leachates. Leachates contain high concentrations of organic and inorganic contaminants, including humic acids, organic substances, nutrients, and heavy metals (such as lead or mercury), as well as electrical conductivity-increasing inorganic salts, and infectious agents. These leachates severely pollute the ecosystem (both land and water).

Furthermore, atmospheric pollution also occurs in landfills due to the conversion of the biodegradable waste fraction into a biogas that generates odors, noises, fire, and even explosions. This biogas produced as a result of the decomposition and fermentation of organic matter is a mixture of methane gas (CH₄) and carbon dioxide (CO₂) and is responsible for global warming. Methane is a greenhouse gas having a global warming potential between 21 and 25 times greater than CO₂.

Lastly, landfills also present a health risk as a result of the accumulation of vectors (rodents, birds, insects, etc.) which transmit diseases (virus, bacteria, etc.). Moreover, waste incineration, which is another form of waste treatment, is neither a renewable nor a clean technology, since household garbage is not a renewable resource, and the combustion thereof generates ashes and emissions of greenhouse gases, substances hazardous to health and the environment, in addition to increasing the pollutant emission rate of countries, therefore increasing the monetary amounts countries have to pay based on their emissions.

Therefore, waste does not disappear with combustion; it is only transformed into gases, liquids, and ashes, in addition to increasing the overall expenditure of the process. The emission of hazardous hydrocarbon particles and ashes, such as sulfur oxide, greenhouse gases, mercury, zinc, cadmium, nickel, chromium, arsenic, and nitrogen, among others, pollute water, land, and air. One of the most important concerns is the generation and release of dioxins and furans which are highly toxic and can travel long distances.

Moreover, according to a report issued by the World Health Organization, WHO, concerning the impact of the environment on health, 23% of deaths, which represent 12.6 million deaths per year, are related to the environment, 8.2 million of which are due to non-communicable diseases.

Today, in the year 2021, every inhabitant of the planet produces an average of 2 kg of waste a day. This means 14000 million kg/day, 14 million tones/day, and 5000 million tones/year. About 60% of said amount ends up in landfills. This is a catastrophe where billions and billions tons of garbage emit thousands and thousands of tons of contaminants into the Earth and the atmosphere all over the world 24 hours a day for hundreds of years. Although it is certain that attempts have been made to overcome the problem by recycling, the disheartening data, however, shows a world average of 10%.

### Description of the Invention

The present invention provides an ultimate comprehensive solution for waste storage by means of a technology capable of managing disposed waste without generating any type of environmental deterioration, preventing bacteria from living and working, and therefore from producing and emitting gases into the atmosphere and leachates into the ground.

More specifically, a first aspect of the invention relates to a method for the inert storage of waste comprising the following operational phases: constructing at least one concrete box that is open at the upper base thereof, dumping waste into the concrete box, and applying a chemical substance with bactericidal and/or biocidal properties on the waste inside the box.

Preferably, the waste is dumped into the box or boxes directly from a waste transport truck, whether a municipal or an industrial waste collection truck, and the chemical substance can be applied every time after dumping waste into the box.

Optionally, the waste can be separated before being dumped into the box, for example, in order to separate recyclable packages or materials.

As the box is being filled, the waste therein is compacted by means of the suitable machinery to optimize the use of the volume of the box.

The chemical substance may consist, for example, of: calcium hydroxide, sodium hydroxide (caustic soda), or sodium hypochlorite, among others.

Once the box is filled with waste, the box is hermetically closed by placing a concrete slab on the upper base thereof. To that end, the concrete slab can be prefabricated and is placed on the open base of the container, applying a sealing substance, for example, cement, in the attachment between both elements, or alternatively, the slab is concreted directly on the rest of the box.

The slab and box are constructed, for example, by means of reinforced concrete, that is strong enough to withstand the weight of a truck or machinery.

When closing each box with the slab, at least one conduit communicating the inside of the box with the outside is placed or formed, and a valve is placed or formed in said conduit to enable introducing a vacuum in the container.

Lastly, a vacuum is applied in the box through the conduit, and the valve keeps the vacuum inside the hermetically closed box. The waste is thereby kept permanently stored inside the box in the absence of biological or chemical activity, due to the chemical substance applied on the waste and to said waste being kept in vacuum conditions, preventing any type of bacterial activity, and therefore the generation of gases or leachates.

In a preferred embodiment of the invention, the method comprises constructing on one and the same plane a first level or structure of concrete boxes that are open at the upper base thereof, wherein the side walls of the boxes are adjoining walls, and one or more boxes are filled up with waste at the same time. In this case, slabs covering two or more boxes at the same time can be formed.

In this embodiment, adjoining boxes are being filled up and closed such that a surface, over which a waste truck can move for dumping waste into empty boxes, such as boxes located in an inner area of the structure of boxes, is gradually formed upon placement of the respective slabs. In other words, once closed, the boxes themselves allow access to other boxes of the structure, so the structure of boxes can be constructed as large as desired.

Likewise, the chemical substance with bactericidal and/or biocidal properties is applied by means of a self-propelled machine provided with a dispenser of said substance, such that said machine gradually moves over the boxes previously closed by means of the concrete slab.

Preferably, the boxes have a square prism geometry, and all of said boxes have the same shape and size to facilitate their construction by means of concreting.

Once all the boxes of the structure are full, closed, and subjected to vacuum, the method of the invention comprises constructing at least a second level or structure on the first level or structure by repeating the operational phases described above.

Another aspect of the invention relates to a landfill for the inert storage of waste, formed by boxes of waste obtained according to the method described above.

As can be seen, one of the main advantages of the method of the invention is that waste storage is performed without any type of environmental emission such as: harmful particles, gases, liquids, or odors, thereby preventing land, water, and air pollution, and preventing the wide-spread practice of waste incineration.

The invention also constitutes a quick and efficient emergency solution in the event of temporary problems such as accidental waste spillage or seasonal increases in population, and accordingly in waste generation (a common problem in coastal areas during holiday periods). The intrinsic character of the technology of the invention conceived from the start of its design and based on process mobility and scalability allows it to be adapted to the suitable amount of waste generated in each location and time period, since it has been envisaged that all the machinery and equipment of the treatment facility are readily transportable to any location where needed in a matter of hours, which allows providing an immediate solution in the event of accidents and/or catastrophes.

For example, the technology of the invention could provide a quick, effective, and efficient solution to landfill spillage like the one that occurred in Zaldibar (the Basque Country), tire landfill fires like the one in Seseña (Castilla La Mancha), all types of contaminant waste accumulation in Mar Menor (Murcia), accumulated plastic islands with a surface area exceeding 1.7 million square km (the Pacific Ocean), etc.

### Brief Description of the Figures

Figure 1 shows a perspective view of the landfill object of the invention, and parts of the operational phases thereof.
Figure 2 shows another perspective view of the operational phase of applying a chemical substance with bactericidal and/or biocidal properties on the waste inside the box.
Figure 3 shows another perspective view illustrating the operational phase of compacting waste inside each box.
Figure 4 shows an elevational section view of a closed waste box, in which a vacuum is being applied therein.
Figure 5 shows a perspective view of the construction of a second level or structure of boxes on a first level or structure of boxes that has been filled up with waste and closed.

### Description of a Preferred Embodiment of the Invention

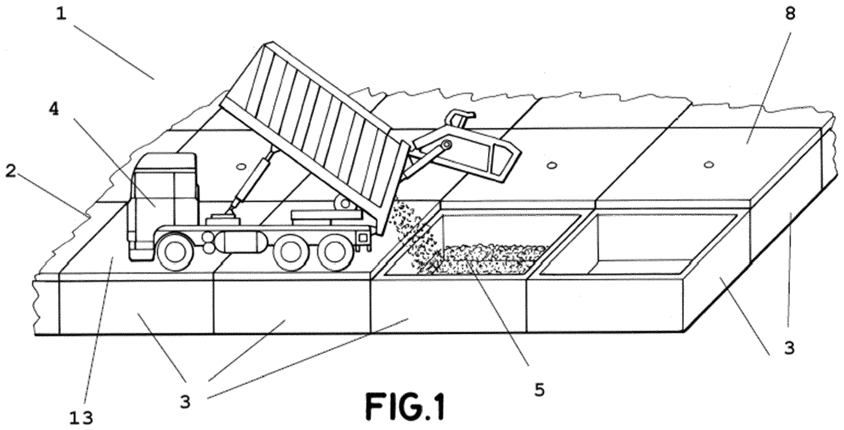

Figure 1 shows a waste landfill in which the operational phases of the method of the invention are carried out, specifically a landfill (1) in which a first level or structure (2) of concrete boxes (3) that are open at the upper base thereof has been constructed, in which all the boxes have the same size and shape, square prisms in this case, and adjoining side walls, i.e., walls that are contacting one another, and are supported on the ground by the lower base thereof.

The structure (2) of boxes (3) can be constructed by means of conventional techniques for constructing concrete structures by means of formworks or by means of concrete 3D printing machinery.

A waste truck (4) directly fills up the boxes (3), either one box or several boxes at a time, for example, the adjoining boxes of one and the same area. In a manner complementary to the trucks or in an alternative manner, the waste can be dumped into the boxes by means of a conveyor belt located at the edges of the boxes.

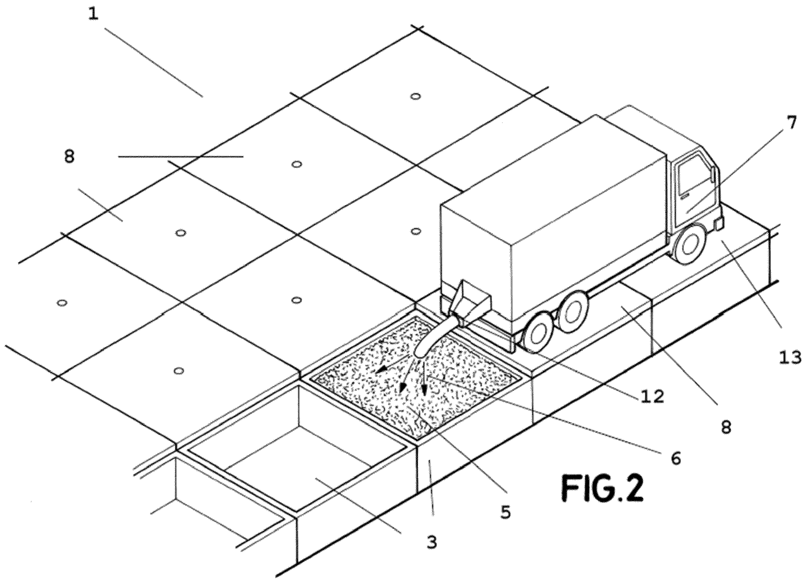

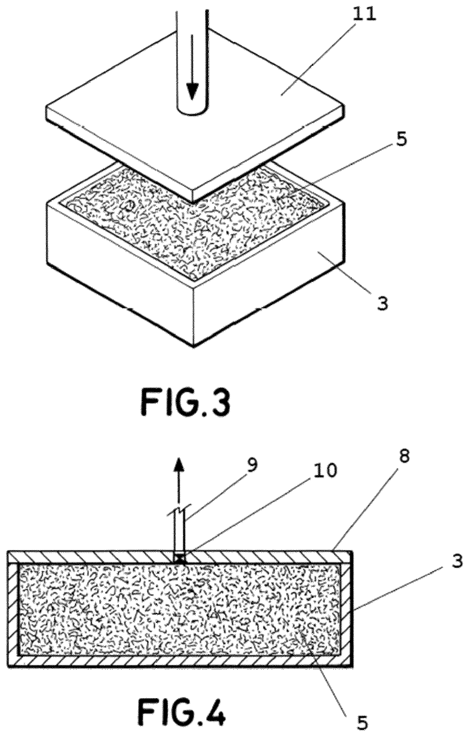

As depicted in Figure 2, as waste (5) is being dumped into the boxes (3) or when it is considered appropriate, a chemical substance (6) with bactericidal and/or biocidal properties is applied on the waste by means of a suitable self-propelled machine (7) provided with a dispenser (12) of said substance. Similarly, the waste is being compacted by means of a compacting machine (11), as schematically depicted in Figure 3.

Once a box (3) is filled with waste, the box is hermetically closed by means of a concrete slab (8) closing the upper base thereof, as more clearly shown in Figure 4, which illustrates how the slab (8) is supported on the side walls of the box (3).

The installation or formation of at least one conduit (9) in the boxes, communicating the inside of the box with the outside, preferably in the slab (8), and a valve (10) in said conduit (9), is envisaged.

Lastly, a vacuum is introduced in each box (3) through the conduit (9), such that the waste (5) is kept permanently stored inside the box in the absence of biological or chemical activity due to the lack of oxygen. The valve (10) is opened to allow air to be extracted from inside the box for introducing the vacuum, and it is then closed to maintain said condition in the box (3).

As can be seen in Figures 1 and 2, adjoining boxes (3) in the structure of boxes are filled up and closed to form a generally planar surface or platform (13) by means of the closing slabs (8), allowing the waste truck (4) to move over said surface (13) to access the open boxes and dump waste into said boxes with the truck supported on said surface. The chemical substance-dispensing machine (7) and the compacting machine can also move over said surface or platform (13) to access other boxes.

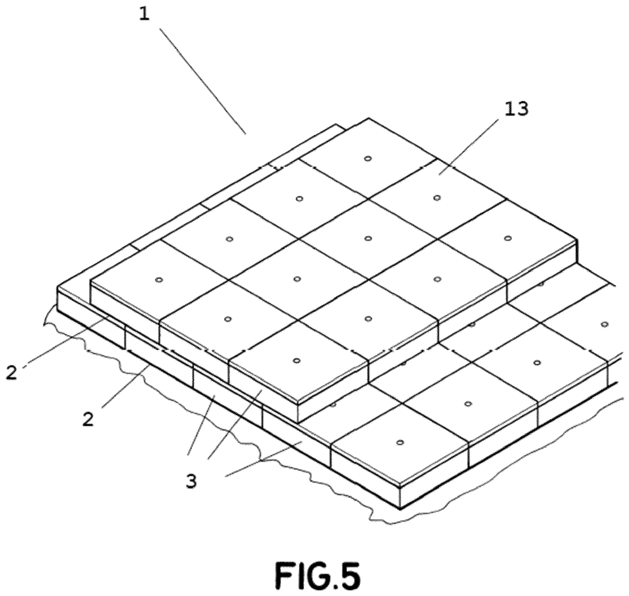

As depicted in Figure 5, once the boxes of the first structure (2) are closed, successive structures (2') can be constructed on the first structure, and the preceding process of filling and closing boxes (3) can be repeated.

## Claims

1. A method for the inert storage of waste, **characterized in that** it comprises:
constructing at least one concrete box (3) that is open at the upper base thereof,
dumping waste (5) into the concrete box (3),
applying a chemical substance (6) with bactericidal and/or biocidal properties on the waste (5) inside the box (3),
once the box (3) is filled with waste, hermetically closing the box by placing a concrete slab (8) on the upper base thereof,
arranging at least one conduit (9) communicating the inside of the box (3) with the outside, and a valve (10) in said conduit (9), and
applying vacuum in the box (3) through the conduit (9), such that the waste (5) is kept permanently stored inside the box (3) in the absence of biological or chemical activity.

2. The method according to claim 1, which comprises constructing on one and the same plane a first structure of concrete boxes that are open at the upper base thereof, wherein the side walls of the boxes are adjoining walls, and filling up one box, or two or more boxes, at the same time, with waste.

3. The method according to claim 1 or 2, which further comprises compacting the waste inside the box or boxes as waste is being dumped therein, prior to closing each box.

4. The method according to claims 1 to 3, wherein the chemical substance is applied every time after dumping waste into the box.

5. The method according to any of the preceding claims, wherein the chemical substance is: calcium hydroxide, sodium hydroxide, or sodium hypochlorite.

6. The method according to any of the preceding claims, wherein the box is in the shape of a square prism, and wherein all the boxes have the same shape and size.

7. The method according to any of the preceding claims, wherein the waste is dumped into the box or boxes directly from a transport truck.

8. The method according to any of the preceding claims, wherein the concrete slab is placed by concreting the slab directly on the rest of the box.

9. The method according to claim 8, wherein the concrete slab closes two or more boxes at the same time.

10. The method according to any of the preceding claims, wherein the concrete slab is prefabricated, placed on the open base of the box, and the attachment surface between both elements is sealed.

11. The method according to any of the preceding claims, wherein before dumping waste into the container, packages are separated and subsequently ground to be deposited in a concrete box later on.

12. The method according to claim 7, which comprises filling up and closing adjoining boxes in the structure of boxes to form a generally planar surface by means of the closing slabs, and moving the waste truck over said surface, and dumping waste into open boxes with the truck supported on said surface.

13. The method according to claim 2, wherein the chemical substance with bactericidal and/or biocidal properties is applied by means of a self-propelled machine provided with a dispenser of said substance, and in that the method comprises moving said machine over the boxes previously closed by means of the concrete slab.

14. The method according to claim 2, which further comprises constructing at least a second structure of boxes that are open at the upper base thereof on the first structure once the boxes of the first structure are closed.

15. Landfill for the inert storage of waste in which boxes of waste obtained according to the method of any of preceding claims 1 to 14 are stored.
